# FASCICULE DE BREVET EUROPEEN

(11) **EP 3 964 485 B1**
(45) Date de publication et mention de la délivrance du brevet: **27.05.2026**
(21) Numéro de dépôt: 21195156.1
(22) Date de dépôt: 06.09.2021
(51) Int. Cl.: C03B 9/48, C03B 40/00, C03B 9/34, C03B 9/447, C03B 9/347

(54) **INSERT DE MOULE COMPRENANT UN ORGANE DE RUPTURE THERMIQUE POUR UNE MISE EN CONTACT D'UN COL DE BOUTEILLE OU DE FLACON EN VERRE EN COURS DE REFROIDISSEMENT**
EINLAGE EINER FORM UMFASSEND EIN THERMISCHES TRENNORGAN FÜR DIE HERSTELLUNG EINES KONTAKTS MIT DEM HALS EINER GLASFLASCHE ODER EINES GLASFLÄSCHCHENS WÄHREND DES ABKÜHLENS
MOULD INSERT COMPRISING A THERMAL BREAKDOWN MEMBER FOR BRINGING INTO CONTACT A NECK OF A BOTTLE OR GLASS VIAL DURING COOLING

(30) Priorité: 07.09.2020 FR 2009067
(43) Date de publication de la demande: 09.03.2022
(73) Titulaire: Technologie Mecanisme Equipement Engineering, 62120 Campagne les Wardrecques (FR)
(72) Inventeur: Laponche, Christophe, 62400 Essars (FR); Plouard, Fabrice, 59241 Masnières (FR); Malvezin, Raphaël, 62500 Saint-Omer (FR)
(74) Mandataire: RVDB

(56) Documents cités:
- EP-A1- 3 381 869
- EP-B1- 3 381 869
- US-A1- 2013 042 650
- US-A1- 2018 237 328

## Description

### Domaine technique

La présente invention concerne le domaine de la fabrication industrialisée de bouteilles ou flacons en verre.

La présente invention concerne plus particulièrement un organe de rupture thermique destiné à venir au contact d'un col de la bouteille ou du flacon subissant des opérations de moulage et de démoulage durant lesquelles ladite bouteille ou ledit flacon est formé au moyen d'un moule puis est manipulé au moyen d'un outil de préhension, une fois extrait du moule. Un tel organe de rupture thermique a pour fonction de limiter les transferts de chaleur trop rapides du col de la bouteille ou du flacon en contact avec ledit organe, vers le moule ou vers l'outil de préhension, en sorte de faciliter un refroidissement uniforme de la bouteille ou du flacon. Par opérations de moulage au sens de la présente, on entend dans toute la description qui suit toute étape d'un procédé de fabrication d'une bouteille ou d'un flacon en verre, de sa formation dans un moule jusqu'à son refroidissement complet, incluant toute étape de démoulage et de manipulation de la bouteille ou du flacon en verre durant le refroidissement. La présente invention a pour objectif d'empêcher les défauts de fabrication de bouteilles ou de flacons en verre pouvant subvenir au niveau du col de la bouteille ou du flacon.

### Etat de la technique

Le Demandeur observe que la fabrication industrialisée d'un verre creux de type bouteille ou flacon inclut une étape de soufflage d'une goutte de verre dans un moule, le moule constituant le négatif de la bouteille ou du flacon, ainsi qu'une étape de démoulage et de manipulation de la bouteille ou du flacon au moyen d'un outil de préhension présentant la forme d'une pince ou d'une mâchoire.

Durant la fabrication d'une bouteille ou d'un flacon, celle-ci est généralement saisie par son col en sortie du moule, ledit col présentant une forme étrécie par rapport au corps de la 2. bouteille. EP3381869B1 divulgue cette fabrication.

Le contact du col avec le moule puis avec la pince occasionne un refroidissement plus rapide du col par rapport au corps de la bouteille, lequel génère des défauts sous la bague du col et le fragilise.

Pour pallier ces inconvénients, il est connu d'utiliser un insert placé sur le moule dans la zone du col pour réduire la conduction thermique du col de la bouteille ou du flacon vers le moule, ainsi qu'une pince comprenant des mâchoires réduisant la conduction thermique du col de la bouteille ou du flacon vers la pince. En limitant les pertes de chaleur du col de la bouteille ou de flacon vers le moule et/ou la pince, la différence de température entre le col et le corps de la bouteille sont réduits.

Cependant, une fraction non négligeable des bouteilles ou flacons en verre dans une chaîne de production sont encore mis au rebut avant utilisation pour cause de défaut de fabrication. Ce taux de rebut reste élevé même dans des conditions industrialisées et automatisées.

Le Demandeur soumet par conséquent que les solutions employées à ce jour sont insuffisantes et ne permettent pas un refroidissement uniforme et sans défaut des bouteilles ou flacons en verre.

### Résumé de l'invention

La présente invention vise à améliorer la situation actuelle décrite ci-dessus.

La présente invention vise plus particulièrement à remédier aux défauts ci-dessus en proposant un insert et des mâchoires réduisant autant que possible les transferts de chaleur lors du refroidissement d'une bouteille ou d'un flacon en verre.

A cet effet, l'objet de la présente invention concerne un insert de moule de fabrication de bouteilles ou de flacon en verre, un tel moule et un outil de préhension d'une bouteille ou d'un flacon en verre, tels que définis dans le jeu de revendications de la présente demande et mettant en œuvre en particulier une conception d'un organe de rupture thermique pour une mise en contact avec une bouteille ou un flacon en verre en cours de refroidissement, l'organe de rupture thermique présentant une surface de contact dont la forme correspond à celle d'une partie d'une surface de contour externe du col de la bouteille ou du flacon en verre avec laquelle elle est destinée à venir en contact.

Bien évidemment, le refroidissement correspond ici à la transition d'une température de fusion ou proche de la fusion à une température ambiante. Un tel refroidissement se traduit notamment dans la plupart des matériaux par une compression de la matière.

On comprend ici que l'organe de rupture thermique vient directement en contact avec le col de la bouteille ou du flacon en verre en cours de refroidissement. La bouteille ou le flacon étant au moins partiellement malléable, celui-ci est susceptible de prendre la forme de la surface de contact et la surface de contour externe du col au niveau de l'organe de rupture thermique est donc définie par la forme de la surface de contact. Selon la conception de l'organe de rupture thermique, la surface de contact définit tout ou une partie de la surface de contour externe du col de la bouteille ou du flacon, ladite bouteille ou ledit flacon pouvant être en contact direct avec un élément non isolant, notamment un moule, sur des zones où le refroidissement ne représente pas de risque de défauts.

Avantageusement, l'organe de rupture thermique comprend une structure alvéolaire et est constitué d'un matériau à faible conductivité thermique, de sorte que l'organe de rupture thermique et le col de la bouteille ou du flacon effectuent un contact à transfert de chaleur minimisé.

La structure alvéolaire permet de limiter autant que possible les transferts de chaleur au sein de l'organe de rupture thermique en créant des poches d'air interne, l'air présentant une conductivité thermique inférieure à la plupart des matériaux solides et les poches d'air présentant des dimensions réduites, lesquelles limitent les transferts thermiques par convection.

En d'autres termes, la structure alvéolaire de l'organe de rupture thermique permet de réduire sa conductivité thermique au-delà de celle du matériau et d'améliorer encore plus ses propriétés isolantes.

Grâce à la présente invention, la bouteille ou le flacon effectue un refroidissement plus uniforme, ce qui génère moins de défauts au niveau du col de la bouteille ou du flacon et augmente ainsi la productivité des procédés de fabrication industrialisée de bouteilles ou de flacons en verre par réduction des rebuts.

Dans un mode de réalisation avantageux de l'invention, l'organe comporte une âme présentant la structure alvéolaire et une peau présentant une structure pleine et recouvrant l'âme dans au moins la zone correspondant à la surface de contact.

On comprend ici que la peau sert d'intermédiaire entre le col de la bouteille ou du flacon et l'âme alvéolaire. Cette structure permet notamment d'empêcher l'infiltration d'éléments en fusion ou malléables dans la structure alvéolaire ou encore de concevoir une peau dont la forme correspond au plus près à la partie de surface de contour externe sans limitation imposée par la structure alvéolaire.

On comprend additionnellement que la peau peut recouvrir l'âme au-delà de la zone correspondant à la surface de contact, par exemple afin d'assurer une fonction de soutien structurel à l'âme alvéolaire.

De préférence, la peau présente une épaisseur inférieure à 800 microns, de préférence 600 microns.

Cette épaisseur de peau permet d'assurer par sa finesse que la surface de contact prenne instantanément la température de la partie de surface de contour externe en évitant un transfert de chaleur prolongé causé par la peau. Cette fine épaisseur limite également les transferts de chaleur par conduction le long de la peau.

Dans un mode de réalisation particulier, le matériau à faible conductivité thermique est choisi parmi le titane, le plomb, l'acier ou encore un alliage métallique, de préférence un alliage de titane.

L'homme du métier comprend ici que le matériau est choisi selon une combinaison de critères incluant la conductivité thermique du matériau, son point de fusion, sa résistance à la rupture, sa dureté ou encore ses propriétés de dilatation thermique.

Dans un mode de réalisation spécifique, l'organe de rupture thermique est fabriqué par impression tridimensionnelle.

Ce procédé de fabrication permet un coût réduit pour la réalisation d'organes de rupture thermique à petite échelle et une facilité de conception de formes complexes, notamment une structure alvéolaire.

Selon un premier aspect, la présente invention concerne un insert de moule comprenant une surface de contour interne sur laquelle est destinée à venir en contact la surface de contour externe du col de la bouteille ou du flacon lors de sa fabrication au moyen du moule de fabrication de bouteilles ou de flacon en verre, ledit insert comprenant au moins deux organes de rupture thermique tel que précité, les au moins deux organes de rupture thermique étant joints de sorte que leurs surfaces de contact forment la surface de contour interne.

On comprend ici que la surface de contour externe comporte la zone du col de la bouteille ou du flacon dont le refroidissement présente le risque d'une formation de défauts et que l'insert vient entrer en contact avec cette surface de contour externe dudit col de sorte à assurer que la surface de contour externe refroidisse de façon homogène par rapport au reste de la bouteille ou du flacon. L'insert de moule permet donc de limiter considérablement les transferts thermiques entre le moule et la surface de contour externe du col de la bouteille ou du flacon, dans la zone de positionnement dudit insert de moule à l'intérieur dudit moule.

On comprend additionnellement que la jointure des au moins deux organes de rupture thermique compris dans l'insert permet de faciliter la séparation de l'insert et de la bouteille ou du flacon en verre après refroidissement, sans restriction sur la forme de la bouteille ou du flacon.

De préférence, l'insert de moule présente la forme d'un anneau, les au moins deux organes de rupture thermique constituant chacun une portion d'anneau.

En d'autres termes, la surface de contour interne de l'insert correspond à la forme de la surface de contour externe du col de la bouteille ou du flacon et la forme globale de l'insert correspond à celle d'un anneau venant s'insérer dans le moule.

Bien évidemment, la portion d'anneau associée à chaque organe de rupture thermique peut s'étendre selon un angle similaire à celui de la portion de moule associée, le moule étant lui-même nécessairement réalisé en plusieurs parties pour son ouverture et le retrait de la bouteille ou du flacon. Le nombre d'organes de rupture thermique est dans ce cas égal au nombre de parties constituant la section associée du moule.

Dans un mode de mise en œuvre particulier, chacun des organes de rupture thermique comprend au moins une ouverture de passage d'un élément de fixation pour sa fixation au moule.

Bien évidemment, l'au moins une ouverture de passage d'un élément de fixation est ménagée de sorte à ne pas dénaturer la surface de contour interne et à conserver les propriétés d'isolation thermique de l'organe de rupture thermique.

D'autres moyens de fixation connus de l'homme du métier peuvent être employés en substitution des vis.

De préférence, l'au moins une ouverture de passage d'un élément de fixation a une forme carrée. Cette forme carrée est avantageuse pour certains modes de façonnage de la pièce. Cependant une forme ronde ou ovale, voire d'autres formes, peut être envisagée selon le mode de façonnage de la pièce.

Selon un autre aspect, la présente invention concerne un moule de fabrication de bouteilles ou de flacons en verre, lequel comprend une empreinte constituant le négatif de la bouteille ou du flacon et un insert tel que précité, l'insert étant conçu et positionné au niveau de l'empreinte pour venir en contact avec la surface de contour externe du col de la bouteille ou du flacon moulé afin de minimiser le transfert thermique du col de la bouteille ou de flacon vers le moule dans la zone de contact avec l'insert.

On comprend ici que le moule peut être réalisé en plusieurs parties. Comme énoncé ci-dessus, les conceptions de l'insert et du moule peuvent être complémentaires, notamment par la réalisation d'un moule en plusieurs parties et d'organes de rupture thermique de formes correspondantes ou encore par le ménagement dans le moule d'alésages pour la réception des organes de rupture thermique.

Bien évidemment, l'insert peut être conçu et positionné pour venir en contact avec toute section de la bouteille ou du flacon présentant une autre section étrécie que le col et sujet à des risques de défaut similaires, selon la conception de la bouteille ou du flacon.

Un autre aspect de la présente invention concerne un outil de préhension d'une bouteille ou d'un flacon en verre en cours de refroidissement, lequel comprend une mâchoire permettant de saisir la surface de contour externe du col de la bouteille ou du flacon, la mâchoire comprenant au moins deux organes de rupture thermique tels que précités, les surfaces de contact des organes de rupture thermique venant au contact avec la surface de contour externe du col de la bouteille ou du flacon lors de sa préhension.

On comprend ici que l'outil de préhension permet de saisir la bouteille ou le flacon en verre en cours de refroidissement *via* la mâchoire, notamment lors de son démoulage ou lors de toute opération suivant son démoulage. Cette conception permet de saisir le col de la bouteille ou du flacon par sa surface de contour externe, permettant une saisie stable et nécessitant une isolation thermique pour éviter son refroidissement trop rapide par rapport au corps de la bouteille ou du flacon durant sa manipulation.

Bien évidemment, la zone de contact entre les surfaces de contact des organes et la surface de contour externe peut correspondre à une partie ou une totalité de la surface de contour externe et est principalement contrainte par des critères de maintien stable de la bouteille ou du flacon et de répartition des forces appliquées sur la zone de contact.

De préférence, l'outil comprend au moins deux bras de support recevant respectivement les au moins deux organes de rupture thermique de manière à former la mâchoire.

On comprend ici que chaque bras de support peut présenter une première extrémité recevant un organe de rupture thermique et une deuxième extrémité qui sera assemblée à un mécanisme d'actionnement de l'outil pour l'ouverture et la fermeture de la mâchoire. La forme des bras de support et leur assemblage entre eux peuvent correspondre à tout outil de préhension bien connu de l'homme du métier et permettent aux bras de resserrer les organes de rupture thermique l'un vers l'autre pour former la mâchoire.

Les bras de support peuvent également présenter une structure alvéolaire similaire à celle de l'organe de rupture thermique afin d'améliorer l'isolation de la surface de contour externe, ou toute autre structure selon les critères de fabrication et d'utilisation.

De préférence, chacun des bras de support et l'organe de rupture thermique qui lui est respectivement associé sont constitués d'un élément monobloc.

Cette conception permet de simplifier la fabrication de l'outil par la réalisation de bras adaptés à la préhension de bouteilles ou du flacons en verre en cours de refroidissement sans accessoire particulier. Un tel outil est naturellement adapté à d'autres tâches de préhension ne présentant pas de contraintes spécifiques.

On comprend ici que la conception de l'outil peut se baser sur tout outil employé dans l'industrie pour saisir une bouteille ou un flacon par son col, une telle conception incluant alors l'ajout d'organes de rupture thermique au niveau de la zone de contact avec le col de la bouteille ou du flacon.

Ainsi, par les différentes caractéristiques techniques fonctionnelles et structurelles ci-dessus, le Demandeur propose un insert de moule de fabrication de bouteilles ou de flacons en verre, un tel moule et un outil de préhension d'une bouteille ou d'un flacon en verre permettant la mise en contact de la bouteille ou du flacon en cours de refroidissement de manière à minimiser les transferts de chaleur associés à une telle mise en contact et permettant d'améliorer le refroidissement homogène de la bouteille ou du flacon, évitant ainsi un défaut de conception au niveau de son col.

### Brève description des figures

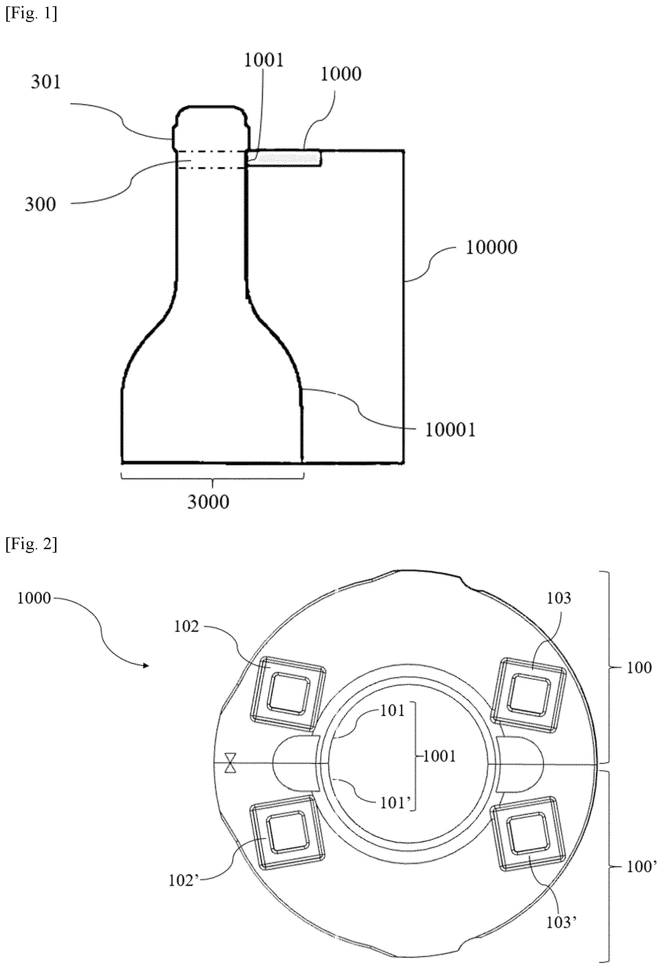

Les caractéristiques et avantages de la présente invention ressortiront de la description ci-dessous en référence aux figures 1 à 8 annexées illustrant une pluralité d'exemples de réalisation qui sont dépourvus de tout caractère limitatif et sur lesquelles :
[Fig. 1]
   La figure 1 représente une vue schématique en coupe d'une partie de moule recevant un insert comprenant un organe de rupture thermique selon un exemple de réalisation de la présente invention.
[Fig. 2]
   La figure 2 représente une vue schématique de face d'un insert conforme à la figure 1.
[Fig. 3]

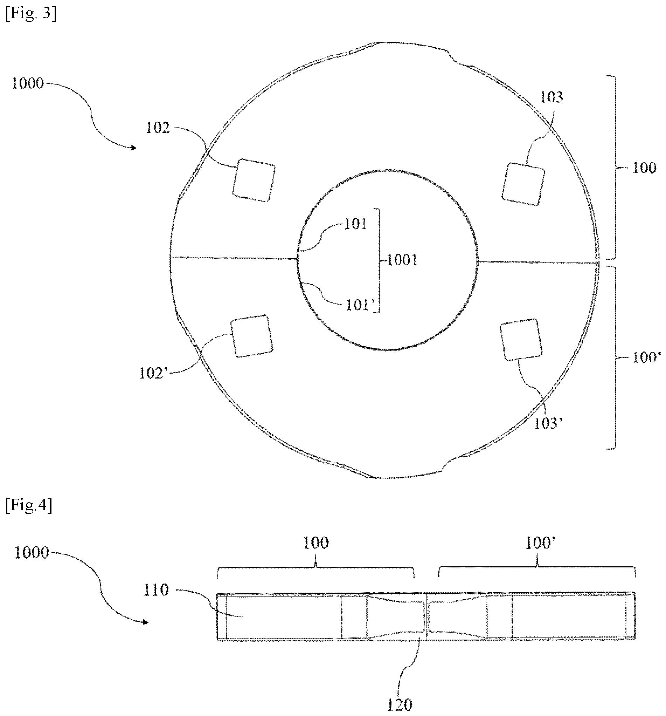

   La figure 3 représente une vue schématique de dos d'un insert conforme à la figure 1.
[Fig. 4]
   La figure 4 représente une vue schématique de profil d'un insert conforme à la figure 1.
[Fig. 5]

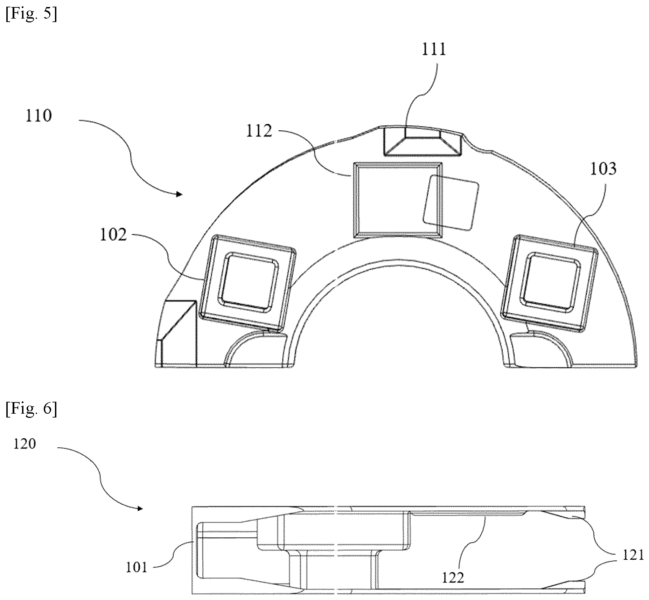

   La figure 5 représente une vue schématique de face de l'âme d'un organe de rupture thermique conforme à la figure 1.
[Fig. 6]
   La figure 6 représente une vue schématique de profil de la peau d'un organe de rupture thermique conforme à la figure 1.
[Fig. 7]

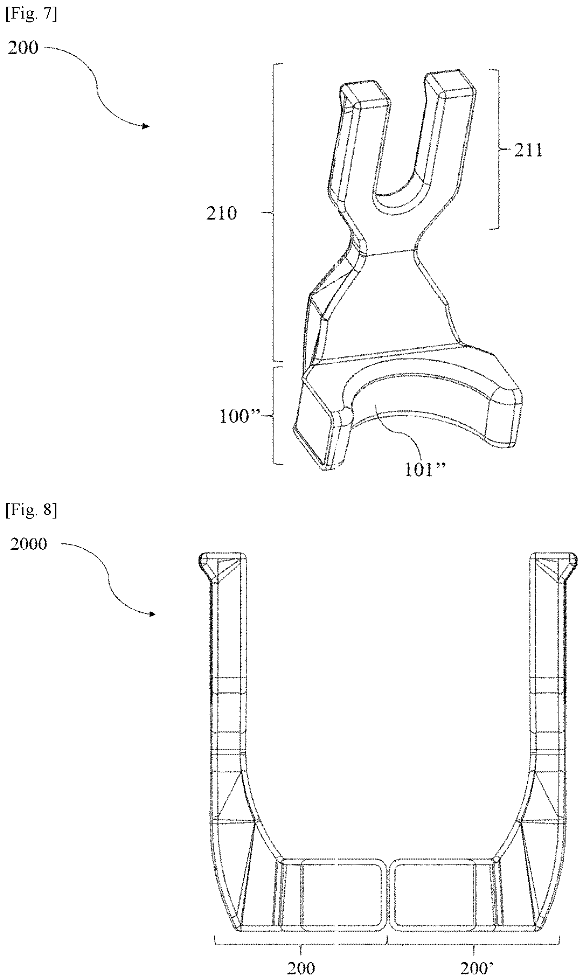

   La figure 7 représente une vue schématique en perspective d'un bras de support recevant un organe de rupture thermique et faisant partie d'un outil de préhension selon un autre exemple de réalisation de l'invention.
[Fig. 8]
   La figure 8 représente une vue schématique de profil d'un outil comportant deux bras de support conformes à la figure 7.

### Description détaillée

La présente invention va maintenant être décrite dans ce qui va suivre en référence conjointement aux figures 1 à 8 annexées à la description.

Comme indiqué dans le préambule de la description, le refroidissement du col d'une bouteille ou d'un flacon moulé peut être homogénéisé par rapport au reste de la bouteille ou du flacon par l'emploi d'inserts et de mâchoires spécifiques conçus pour réduire la conduction thermique du col vers respectivement le moule et la pince employés lors de sa fabrication. Cependant, les solutions employées jusqu'ici sont insuffisantes et conduisent toujours à une génération fréquente de défauts.

Un des objectifs de l'organe de rupture thermique 100 développé dans le cadre de la présente consiste à résoudre ce problème.

Dans la suite de la description, le terme pièce est utilisé pour désigner une bouteille ou un flacon en verre.

Selon l'exemple de la figure 1, une pièce 3000 est fabriquée dans un moule 10000. Ce moule 10000 comprend une empreinte 10001 qui forme le négatif de la pièce 3000. La fabrication de la pièce 3000 correspond alors à l'introduction d'une goutte de verre dans le moule 10000, laquelle est soufflée de sorte que la forme de la pièce 3000 corresponde à la forme de l'empreinte 10001, la pièce 3000 étant creuse de manière à former un contenant.

Dans cet exemple, la pièce 3000 comporte une surface de contour externe 300 dont la forme représente un étrécissement local correspondant au col de bouteille ou de flacon, ledit col étant situé sous une bague 301. La présence d'une surface de contour externe 300 de forme étrécie représente souvent une zone adaptée pour sa préhension, mais un tel étrécissement local implique une irrégularité dans la forme de la pièce 3000 engendrant un refroidissement différencié et des défauts de fabrication.

Par conséquent, le moule 10000 comporte un insert 1000 positionné au niveau de la surface de contour externe 300 du col de la pièce 3000. Selon l'exemple des figures 2 et 3, l'insert 1000 comprend une surface de contour interne 1001 destinée à venir en contact avec la surface de contour externe 300 dudit col. Comme illustré en figure 1, l'insert 1000 est conçu pour être positionné à l'intérieur du moule 10000 et la surface de contour interne 1001 est conçue de façon à assurer la continuité avec l'empreinte 10001 du moule 10000 pour former le négatif de la pièce 3000.

L'insert 1000 comprend au moins deux organes de rupture thermique 100 et 100'. L'insert 1000 est par exemple composé intégralement de l'association des au moins deux organes de rupture thermique 100 et 100'. Selon un autre exemple, l'insert 1000 comprend un corps venant supporter les au moins deux organes de rupture thermique 100 et 100', le corps étant conçu de façon à ne pas interférer avec la pièce 3000.

Selon l'exemple des figures 2 à 4, l'insert 1000 comprend les deux organes de rupture thermique 100 et 100', chacun comportant une surface de contact 101 et 101' destinée à venir en contact avec la surface de contour externe 300 du col de la pièce 3000. La surface de contour interne 1001 de l'insert 1000 consiste alors en la jointure des multiples surfaces de contact 101 et 101'.

Optionnellement, chacun des deux organes de rupture thermique 100 et 100' présentent la forme d'une portion d'anneau de sorte que l'insert 1000 présente la forme d'un anneau une fois joints les organes de rupture thermique 100 et 100'. Cette conception est à la fois intuitive et adaptée à la fabrication de bouteilles.

Dans ce même exemple, les organes de rupture thermique 100 et 100' comportent des ouvertures, respectivement 102, 103 et 102', 103' dimensionnées pour le passage d'éléments de fixation, par exemple des vis de fixation. Ces ouvertures 102, 103, 102', 103' correspondent à des alésages ménagés dans le moule 10000 pour faciliter et sécuriser le positionnement de l'insert 1000. Tel qu'illustré sur les figures 2 et 3, ces ouvertures 102, 103, 102', 103' présentent une forme carrée et ont des orientations qui facilitent le façonnage des organes de rupture thermique 100 et 100', d'autres formes pouvant toutefois être envisagées, par exemple une forme circulaire ou ovale.

Après que la goutte de verre en fusion a été soufflé dans le moule 10000 et que la pièce 3000 a pris la forme de l'empreinte 10001, celle-ci va progressivement refroidir et transférer de la chaleur par conduction vers le moule 10000 et l'insert 1000. Au niveau de la surface de contour externe 300, la pièce 3000 va donc transférer de la chaleur vers la surface de contour interne 1001 comportant les surfaces de contact 101 et 101'.

Comme illustré dans les figures 4 à 6, l'organe de rupture thermique 100 comporte une âme 110 recouverte par une peau 120 dans au moins la zone correspondant à la surface de contact 101.

La peau 120 présente au moins dans la zone de la surface de contact 101 une épaisseur très faible par rapport aux dimensions de l'organe de rupture thermique 100 et de la pièce 3000, par exemple une épaisseur de 800 microns et de préférence inférieure à 600 microns. Cette faible épaisseur permet à la peau 120 de jouer un rôle négligeable dans la transmission de chaleur de la pièce 3000 vers l'organe de rupture thermique 101 étant donné que ladite peau 120 atteint très rapidement la température de la pièce 3000. Il est donc possible de considérer directement le transfert de chaleur de la pièce 3000 vers l'âme 110 et d'ignorer d'éventuels effets de conduction le long de la peau 120, lesquels sont d'un ordre de magnitude inférieurs aux effets de conduction le long de la pièce 3000.

L'âme 110 présente pour sa part une structure alvéolaire, laquelle réduit fortement tout transfert de chaleur, et est réalisée dans un matériau comparativement isolant par rapport aux contraintes de fabrication. L'âme 110 est par exemple réalisée dans un alliage de titane présentant une conductivité thermique sensiblement égale à 8 W.m⁻¹.K⁻¹ tout en étant adapté à un procédé de moulage, les propriétés de cet alliage étant améliorées par la structure alvéolaire de l'âme 110. Dans cette conception, la peau 120 permet de soutenir structurellement l'âme 110 et de présenter une surface pleine dans la zone de la surface de contact 101 pour assurer l'aspect désiré de la surface de contour interne 300 et éviter toute infiltration de matériel en fusion dans l'âme 110.

Optionnellement, l'organe de rupture thermique 100, 100' est réalisé par impression tridimensionnelle afin de faciliter la fabrication de la structure alvéolaire. Selon une conception particulière illustrée dans les figures 5 et 6, l'âme 110 comporte au moins une gorge 111 et/ou une indentation 112 complémentaires des éléments protubérants 121 et/ou 122 de la peau 120 afin de faciliter le positionnement et/ou l'assemblage de l'âme 110 et de la peau 120.

Par conséquent, la pièce 3000 refroidit au moins partiellement dans le moule 10000 en minimisant les échanges thermiques entre la surface de contour externe 300 et l'insert 1000 par la surface de contour interne 1001, ce qui permet de privilégier les effets de conduction entre la surface de contour externe 300 et le reste de la pièce 3000 et de rendre le refroidissement de cette surface de contour externe 300 plus progressif.

La pièce 3000 est ensuite démoulée par l'ouverture du moule 10000 et de l'insert 1000. Le nombre et la forme des organes de rupture thermique 100, 100' composant l'insert 1000 sont par exemple complémentaires des parties du moule 10000 auxquelles ils sont respectivement associés.

Pour désolidariser la pièce 3000 en cours de refroidissement du moule 10000, pour une manipulation de la pièce 3000 ou pour toute autre traitement de la pièce 3000, il est possible de prévoir un outil 2000 de préhension comprenant une mâchoire permettant de saisir la surface de contour externe 300 au niveau de son. Cet outil 2000 présente par exemple la forme d'une pince ou d'un étau venant enserrer la pièce 3000 par la surface de contour externe 300 au niveau du col, sou la bague 301.

L'outil 2000 comprend par exemple au moins deux bras de support 200 tels que celui illustré en figure 7. De préférence, l'outil 2000 tel qu'illustré en figure 8 comprend deux bras de support 200, 200' semblables à la figure 7, les deux bras de support 200, 200' étant disposés en regard. Chaque bras de support 200 reçoit un organe de rupture thermique 100" présentant par exemple une structure similaire aux organes de rupture thermique 100 et 100' décrits ci-avant, incluant une surface de contact 101" apte à venir en contact avec une partie de la surface de contour externe 300, une peau 120 comprenant au moins la surface de contact 101" et une âme 110 alvéolaire permettant de limiter les transferts thermiques de la pièce 3000 vers l'outil 2000. On pourrait toutefois prévoir une variante d'organe de rupture thermique 100'' sur le bras de support 200, sans la peau 120.

Le bras de support 200 comprend par exemple un corps longitudinal 210 apte à recevoir l'organe de rupture thermique 100" selon une première extrémité, ledit organe de rupture thermique 100'' étant positionné en équerre par rapport au corps longitudinal 210. Sur cet exemple de la figure 7, la deuxième extrémité du corps longitudinal 210 comporte une forme de fourche 211 pour son assemblage avec un mécanisme d'actionnement (non illustré) de l'outil 2000.

Dans cet exemple, le bras de support 200 est solidaire de l'organe de rupture thermique 100", lequel s'étend selon un plan perpendiculaire au corps 210 du bras de support 200. Bien évidemment, le bras de support 200 et l'organe de rupture thermique 100" peuvent être conçu en une seule pièce ou selon deux pièces séparées, et la forme du corps 210 du bras de support 200 peut varier selon l'outil 2000 et/ou la pièce 3000 et/ou l'organe de rupture thermique 100".

Selon une conception en accord avec le concept sous-jacent d'isolation thermique, les bras de support 200 présentent également au moins partiellement une structure alvéolaire. Cette conception peut être combinée avec une conception monobloc du bras de support 200 et de l'organe de rupture thermique 100", par exemple un bras de support 200 à forme courbée dont une première extrémité présente l'organe de rupture thermique 100" et une deuxième extrémité présente la fourche 211.

Les organes de rupture thermique 100, 100' de l'insert 1000 et l'organe de rupture thermique 100" de l'outil 2000 sont de préférence conçu en alliage de titane, mais il pourra être envisagé d'autres matières présentant une faible conductivité thermique, par exemple le plomb, l'acier ou encore un alliage métallique.

Le nombre d'organes de rupture thermique sur l'insert 1000 et, de même, sur l'outil 2000 pourra être supérieur à deux, selon la conception du moule 10000 et de l'outil 2000 et la forme de la pièce 3000.

Ainsi, on comprendra que la présente invention prévoit un organe de rupture thermique permettant une mise en contact d'une surface de contour externe du col d'une bouteille ou d'un flacon en cours de refroidissement de manière à minimiser les transferts de chaleur entre la pièce et l'organe de rupture thermique *via* une structure interne alvéolaire. Cet organe de rupture thermique assure un refroidissement homogène et progressif de la bouteille ou du col au niveau de la surface de contour externe de son col et peut être inclus à des inserts de moule ou encore à des outils de préhension de la bouteille ou du col en cours de refroidissement, de façon à améliorer encore les pratiques servant à réduire la conduction thermique à destination du col de la pièce.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Insert (1000) de moule (10000) de fabrication d'une bouteille ou d'un flacon en verre comprenant un col, ledit insert comprenant une surface de contour interne (1001) sur laquelle est destinée à venir en contact une surface de contour externe (300) dudit col lors de la fabrication de la bouteille ou du flacon au moyen dudit moule (10000), ledit insert (1000) comprenant au moins deux organes de rupture thermique (100, 100') présentant chacun une surface de contact (101) dont la forme correspond à celle d'une partie de la surface de contour externe (300) du col avec laquelle elle est destinée à venir en contact, lesdits organes de rupture thermique étant joints de sorte que leurs surfaces de contact (101, 101') forment ladite surface de contour interne (1001), **caractérisé en ce que** chaque organe de rupture thermique (100) comprend une structure alvéolaire et est constitué d'un matériau à faible conductivité thermique pour effectuer un contact à transfert de chaleur minimisé entre l'insert et le col.

2. Insert (1000) selon la revendication 1, lequel présente la forme d'un anneau, lesdits au moins deux organes de rupture thermique (100, 100') constituant chacun une portion d'anneau.

3. Insert (1000) selon l'une quelconque des revendications 1 ou 2, dans lequel chacun desdits organes de rupture thermique (100, 100') comprend au moins une ouverture (102, 103, 102', 103') de passage d'un élément de fixation pour sa fixation au moule (10000).

4. Insert (1000) selon l'une quelconque des revendications 1 à 3, dans lequel chaque organe de rupture thermique (100, 100') comporte une âme (110) présentant ladite structure alvéolaire et une peau (120) présentant une structure pleine et recouvrant ladite âme (110) dans au moins la zone correspondant à ladite surface de contact (101).

5. Insert (1000) selon la revendication 4, dans lequel ladite peau (120) présente une épaisseur inférieure à 800 microns, de préférence 600 microns.

6. Insert (1000) selon l'une quelconque des revendications 1 à 5, dans lequel le matériau à faible conductivité thermique est choisi parmi le titane, le plomb, l'acier ou encore un alliage métallique, de préférence un alliage de titane.

7. Insert (1000) selon l'une quelconque des revendications 1 à 6, dans lequel les au moins deux organes de rupture thermique (100, 100') sont fabriqués par impression tridimensionnelle.

8. Moule (10000) de fabrication d'une bouteille ou d'un flacon en verre, lequel comprend une empreinte (10001) constituant le négatif de la bouteille ou du flacon et un insert (1000) selon l'une quelconque des revendications 1 à 7, ledit insert (1000) étant positionné au niveau de ladite empreinte (10001) pour venir en contact avec le col de la bouteille ou du flacon moulé afin de minimiser le transfert thermique de la bouteille ou du flacon vers ledit moule (10000) dans la zone de contact avec ledit insert (1000).

9. Outil (2000) de préhension d'une bouteille ou d'un flacon en verre en cours de refroidissement, lequel comprend une mâchoire permettant de saisir une surface de contour externe (300) au niveau d'un col de la bouteille ou du flacon, ladite mâchoire comprenant au moins deux organes de rupture thermique (100'') présentant chacun une surface de contact (101") dont la forme correspond à celle d'une partie de la surface de contour externe (300) du col avec laquelle elle est destinée à venir en contact lors de sa préhension, **caractérisé en ce que** chaque organe de rupture thermique (100'') comprend une structure alvéolaire et est constitué d'un matériau à faible conductivité thermique pour effectuer un contact à transfert de chaleur minimisé entre lesdits organes de rupture thermique et le col.

10. Outil (2000) selon la revendication 9, lequel comprend au moins deux bras de support (200, 200') recevant respectivement lesdits au moins deux organes de rupture thermique (100'') de manière à former ladite mâchoire.

11. Outil (2000) selon la revendication 10, dans lequel chacun desdits bras de support (200) et l'organe de rupture thermique (100'') qui lui est respectivement associé sont constitués d'un élément monobloc.

12. Outil (2000) selon l'une quelconque des revendications 9 à 11, dans lequel chaque organe de rupture thermique (100") comporte une âme (110) présentant ladite structure alvéolaire et une peau (120) présentant une structure pleine et recouvrant ladite âme (110) dans au moins la zone correspondant à ladite surface de contact (101").

13. Outil (2000) selon la revendication 12, dans lequel ladite peau (120) présente une épaisseur inférieure à 800 microns, de préférence 600 microns.

14. Outil (2000) selon l'une quelconque des revendication 9 à13, dans lequel le matériau à faible conductivité thermique est choisi parmi le titane, le plomb, l'acier ou encore un alliage métallique, de préférence un alliage de titane.

15. Outil (2000) selon l'une quelconque des revendications 9 à 14, dans lequel les au moins deux organes de rupture thermique (100") sont fabriqués par impression tridimensionnelle.

## Patentansprüche

1. Einsatz (1000) für eine Form (10000) zur Herstellung einer Flasche oder eines Fläschchens aus Glas, die bzw. das einen Hals umfasst, wobei der Einsatz eine innere Konturfläche (1001) umfasst, mit der eine äußere Konturfläche (300) des Halses bei der Herstellung der Flasche oder des Fläschchens mittels der Form (10000) in Kontakt kommen soll, wobei der Einsatz (1000) mindestens zwei thermische Bruchelemente (100, 100') umfasst, die jeweils eine Kontaktfläche (101) aufweisen, deren Form derjenigen eines Teils der äußeren Konturfläche (300) des Halses entspricht, mit dem sie in Kontakt kommen soll, wobei die thermischen Bruchelemente so verbunden sind, dass ihre Kontaktflächen (101, 101') die innere Konturfläche (1001) bilden, **dadurch gekennzeichnet, dass** jedes thermische Bruchelement (100) eine Wabenstruktur umfasst und aus einem Material mit geringer Wärmeleitfähigkeit besteht, um einen minimierten Wärmeübertragungskontakt zwischen Einsatz und Hals herzustellen.

2. Einsatz (1000) nach Anspruch 1, der die Form eines Rings aufweist, wobei die mindestens zwei thermischen Bruchelemente (100, 100') jeweils einen Ringabschnitt bilden.

3. Einsatz (1000) nach einem der Ansprüche 1 oder 2, wobei jedes der thermischen Bruchelemente (100, 100') mindestens eine Öffnung (102, 103, 102', 103') zum Durchführen eines Befestigungselements zur Befestigung an der Form (10000) umfasst.

4. Einsatz (1000) nach einem der Ansprüche 1 bis 3, wobei jedes thermische Bruchelement (100, 100') einen Kern (110) mit der Wabenstruktur und eine Haut (120) mit einer vollen Struktur aufweist, die den Kern (110) in mindestens dem Bereich, der der Kontaktfläche (101) entspricht, abdeckt.

5. Einsatz (1000) nach Anspruch 4, wobei die Haut (120) eine Dicke von weniger als 800 Mikrometern, vorzugsweise 600 Mikrometern, aufweist.

6. Einsatz (1000) nach einem der Ansprüche 1 bis 5, wobei das Material mit geringer Wärmeleitfähigkeit aus Titan, Blei, Stahl oder einer Metalllegierung, vorzugsweise einer Titanlegierung, ausgewählt ist.

7. Einsatz (1000) nach einem der Ansprüche 1 bis 6, wobei die mindestens zwei thermischen Bruchelemente (100, 100') durch dreidimensionalen Druck hergestellt sind.

8. Form (10000) zur Herstellung einer Flasche oder eines Fläschchens aus Glas, die eine Abformung (10001) umfasst, die das Negativ der Flasche oder des Fläschchens bildet, und einen Einsatz (1000) nach einem der Ansprüche 1 bis 7, wobei der Einsatz (1000) auf Höhe der Abformung (10001) positioniert ist, um mit dem Hals der geformten Flasche oder des geformten Fläschchens in Kontakt zu kommen, um die Wärmeübertragung von der Flasche oder dem Fläschchen auf die Form (10000) im Kontaktbereich mit dem Einsatz (1000) zu minimieren.

9. Werkzeug (2000) zum Greifen einer Flasche oder eines Fläschchens aus Glas während des Abkühlens, das eine Backe zum Greifen einer äußeren Konturfläche (300) an einem Hals der Flasche oder des Fläschchens umfasst, wobei die Backe mindestens zwei thermische Bruchelemente (100'') umfasst, die jeweils eine Kontaktfläche (101'') aufweisen, deren Form der eines Teils der äußeren Konturfläche (300) des Halses entspricht, mit dem er bei dem Greifen in Kontakt kommen soll, **dadurch gekennzeichnet, dass** jedes thermische Bruchelement (100'') eine Wabenstruktur umfasst und aus einem Material mit geringer Wärmeleitfähigkeit besteht, um einen Kontakt mit minimierter Wärmeübertragung zwischen den thermischen Bruchelementen und dem Hals herzustellen.

10. Werkzeug (2000) nach Anspruch 9, das mindestens zwei Stützarme (200, 200') umfasst, die jeweils die mindestens zwei thermischen Bruchelemente (100'') aufnehmen, um die Backe zu bilden.

11. Werkzeug (2000) nach Anspruch 10, wobei jeder der Stützarme (200) und das ihm jeweils zugeordnete thermische Bruchelement (100'") aus einem einteiligen Element bestehen.

12. Werkzeug (2000) nach einem der Ansprüche 9 bis 11, wobei jedes thermische Bruchelement (100'') einen Kern (110) mit der Wabenstruktur und eine Haut (120) mit einer vollen Struktur aufweist, die den Kern (110) in mindestens dem Bereich, der der Kontaktfläche (101'') entspricht, abdeckt.

13. Werkzeug (2000) nach Anspruch 12, wobei die Haut (120) eine Dicke von weniger als 800 Mikrometern, vorzugsweise 600 Mikrometern, aufweist.

14. Werkzeug (2000) nach einem der Ansprüche 9 bis 13, wobei das Material mit geringer Wärmeleitfähigkeit aus Titan, Blei, Stahl oder einer Metalllegierung, vorzugsweise einer Titanlegierung, ausgewählt ist.

15. Werkzeug (2000) nach einem der Ansprüche 9 bis 14, wobei die mindestens zwei thermischen Bruchelemente (100'') durch dreidimensionalen Druck hergestellt werden.

## Claims

1. Insert (1000) for a mould (10000) for manufacturing a glass bottle or vial comprising a neck, said insert comprising an inner contour surface (1001) on which an outer contour surface (300) of said neck is intended to come into contact during the manufacture of the bottle or vial by means of said mould (10000), said insert (1000) comprising at least two thermal rupture members (100, 100') each having a contact surface (101) the shape of which corresponds to that of a part of the outer contour surface (300) of the neck with which it is intended to come into contact, said thermal rupture members being joined so that their contact surfaces (101, 101') form said inner contour surface (1001), **characterised in that** each thermal rupture member (100) comprises a cellular structure and consists of a material with a low thermal conductivity in order to perform contact with minimised heat transfer between the insert and the neck.

2. Insert (1000) according to claim 1, which has the shape of a ring, each of said at least two thermal rupture members (100, 100') forming a ring portion.

3. Insert (1000) according to any one of claims 1 or 2, wherein each of said thermal rupture members (100, 100') comprises at least one opening (102, 103, 102', 103') for the passage of a fastening element for fastening thereof to the mould (10000).

4. Insert (1000) according to any one of claims 1 to 3, wherein each thermal rupture member (100, 100') comprises a core (110) having said cellular structure and a skin (120) having a solid structure and covering said core (110) in at least the zone corresponding to said contact surface (101).

5. Insert (1000) according to claim 4, wherein said skin (120) has a thickness of less than 800 microns, preferably 600 microns.

6. Insert (1000) according to any one of claims 1 to 5, wherein the low thermal conductivity material is chosen from titanium, lead, steel or a metal alloy, preferably a titanium alloy.

7. Insert (1000) according to any one of claims 1 to 6, wherein the at least two thermal rupture members (100, 100') are manufactured by three-dimensional printing.

8. Mould (10000) for manufacturing a glass bottle or vial, which comprises a cavity (10001) forming the negative of the bottle or vial and an insert (1000) according to any one of claims 1 to 7, said insert (1000) being positioned at said cavity (10001) to come into contact with the neck of the moulded bottle or vial in order to minimise heat transfer from the bottle or vial to said mould (10000) in the contact zone with said insert (1000).

9. Tool (2000) for gripping a glass bottle or vial during cooling, which comprises a jaw for gripping an outer contour surface (300) at a neck of the bottle or vial, said jaw comprising at least two thermal rupture members (100'') each having a contact surface (101'') the shape of which corresponds to that of a part of the outer contour surface (300) of the neck with which it is intended to come into contact during the gripping thereof, **characterised in that** each thermal rupture member (100") comprises a cellular structure and consists of a low thermal conductivity material in order to perform contact with minimised heat transfer between said thermal rupture members and the neck.

10. Tool (2000) according to claim 9, which comprises at least two support arms (200, 200') respectively receiving said at least two thermal rupture members (100'') so as to form said jaw.

11. Tool (2000) according to claim 10, wherein each of said support arms (200) and the thermal rupture member (100'') respectively associated with it are made as a one-piece element.

12. Tool (2000) according to any one of claims 9 to 11, wherein each thermal rupture member (100'') comprises a core (110) having said cellular structure and a skin (120) having a solid structure and covering said core (110) in at least the zone corresponding to said contact surface (101").

13. Tool (2000) according to claim 12, wherein said skin (120) has a thickness of less than 800 microns, preferably 600 microns.

14. Tool (2000) according to any one of claims 9 to 13, wherein the low thermal conductivity material is chosen from titanium, lead, steel or a metal alloy, preferably a titanium alloy.

15. Tool (2000) according to any one of claims 9 to 14, wherein the at least two thermal rupture members (100") are manufactured by three-dimensional printing.
